(19)

**Europäisches Patentamt**
**European Patent Office**
**Office européen des brevets**

(11) **EP 2 889 269 A2**

(12) **EUROPEAN PATENT APPLICATION**

(43) Date of publication:
01.07.2015 Bulletin 2015/27

(51) Int Cl.:
*C01B 39/48* (2006.01)  *B01J 29/70* (2006.01)
*B01J 35/04* (2006.01)  *C04B 38/00* (2006.01)
*B01D 53/94* (2006.01)

(21) Application number: **14193868.8**

(22) Date of filing: **19.11.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.12.2013 JP 2013271865**

(71) Applicant: **Ibiden Co., Ltd.**
**Ogaki-shi**
**Gifu 503-8604 (JP)**

(72) Inventors:
• **Usui, Toyohiro**
  **Ibigawacho,**
  **Gifu, 501-0695 (JP)**
• **Murakami, Takunari**
  **Ibigawacho,**
  **Gifu, 501-0695 (JP)**

(74) Representative: **Hoefer & Partner**
**Pilgersheimer Straße 20**
**81543 München (DE)**

(54) **METHOD FOR MANUFACTURING CHA-ZEOLITE AND HONEYCOMB CATALYST**

(57)    The present invention provides a method for manufacturing a CHA-structured aluminosilicate zeolite having small variations in the particle size and the $SiO_2/Al_2O_3$ molar ratio. The method including a synthesis step of synthesizing a zeolite by reacting a raw material composition containing a Si source, an Al source, an alkali source, and a structure directing agent, the Al source being a dried aluminum hydroxide gel. The present invention further provides a honeycomb catalyst comprising this CHA-structured aluminosilicate zeolite and a method to make this catalyst.

FIG.5

Example 1
(Dried aluminum hydroxide gel)

Comparative Example 2
(Pseudo-boehmite)

Comparative Example 1
(Aluminum hydroxide)

$2\theta$ [°]

EP 2 889 269 A2

**Description**

TECHNICAL FIELD

The present invention relates to a method for manufacturing a zeolite, and a honeycomb catalyst.

BACKGROUND ART

Conventionally, a SCR (Selective Catalytic Reduction) system in which ammonia reduces NOx to nitrogen and water is known as a system for converting exhaust gases discharged from automobiles.
In addition, a honeycomb molded product of a composition containing a zeolite is known as a catalyst carrier used in the SCR system.
For example, Patent Literature 1 discloses a honeycomb structured body including a honeycomb unit, wherein the honeycomb unit contains a phosphate zeolite (e.g., SAPO) and an inorganic binder, includes macropores having an average pore size of 0.1 $\mu$m or more but 0.3 $\mu$m or less, and has a porosity of 30% or more but 40% or less. According to the honeycomb structured body disclosed in Patent Literature 1, setting the average pore size of the macropores to 0.1 to 0.3 $\mu$m allows exhaust gases sufficiently to permeate through the inside of the partition wall.
Patent Literature 2 discloses a CHA-structured zeolite ion-exchanged with copper ions, as a zeolite catalyst used in the SCR system. Patent Literature 2 teaches that the disclosed zeolite catalyst shows high NOx converting performance after aging by hot water.
The CHA-structured zeolite is a zeolite having a crystal structure equivalent to that of naturally produced chabazite. Here, CHA is a code defining the structure of zeolite determined by the International Zeolite Association (IZA).
As examples of a method for manufacturing such a CHA-structured zeolite (hereafter, also referred to as CHA zeolite), Patent Literature 3 and 4 each disclose a method for synthesizing a CHA zeolite having a high $SiO_2/Al_2O_3$ molar ratio (i.e., having a high silica content). As disclosed in Patent Literature 3 and 4, conventionally used for synthesis of a CHA zeolite are colloidal silica as a Si source, aluminum hydroxide, sodium aluminate, or the like as an Al source, and other components such as a structure directing agent and an alkali source.

CITATION LIST

- Patent Literature

Patent Literature 1: WO 2011/061836
Patent Literature 2: US Patent No. 7,601,662
Patent Literature 3: US Patent No. 4,544,538
Patent Literature 4: WO 2010/074040

SUMMARY OF INVENTION

- Technical Problem

The present inventors have studied about molding a composition containing a CHA zeolite into a honeycomb shape for obtaining a honeycomb catalyst excellent in the NOx converting performance. The word "zeolite" refers to aluminosilicate in a narrow sense and encompasses silicoaluminophosphate (SAPO) in a broad sense. The narrow sense of the word "zeolite" is employed here.
The present inventors found out that, when a CHA zeolite is synthesized by a conventional method as disclosed in Patent Literature 3 and 4, the synthesized CHA zeolite vary widely in the particle size and the $SiO_2/Al_2O_3$ molar ratio. They also found out that a honeycomb catalyst manufactured using such a CHA zeolite is less likely to exert stable NOx converting performance.
The present invention devised to solve the above problem aims to provide a method for manufacturing a CHA-structured zeolite having small variations in the particle size and the $SiO_2/Al_2O_3$ molar ratio. The present invention also aims to provide a honeycomb catalyst including the zeolite manufactured by the above method and being excellent in NOx converting performance. The present invention further aims to provide a method for manufacturing a honeycomb catalyst including the method for manufacturing a zeolite, and a zeolite manufactured by the above method.

- Solution to problem

A method for manufacturing a zeolite of the present invention is a method for manufacturing a zeolite that is a CHA-structured aluminosilicate, the method including a synthesis step of synthesizing a zeolite by reacting a raw material composition containing a Si source, an Al source, an alkali source, and a structure directing agent, the Al source being a dried aluminum hydroxide gel.

In the process of synthesizing a zeolite, the skeleton of a zeolite is formed from aluminum oxide, and therefore, the Al source is preferably an aluminum hydroxide, which is similar to aluminum oxide and has solubility. The present inventors focused on the solubility of the Al source in an alkaline solution, which has not been focused on. The use of an Al source having higher solubility than conventional aluminum hydroxide, specifically, the use of a dried aluminum hydroxide gel having a solubility of 1.0 g or more in 100 g of a 1 mol/L aqueous potassium hydroxide solution enables reducing variations in the particle size and the $SiO_2/Al_2O_3$ molar ratio of the synthesized zeolite.

In the process of synthesizing a zeolite, presumably, a crystal nucleus of the zeolite which includes a structure directing agent as a nucleus is first generated, and the crystal nucleus grows to form a crystal having a predetermined particle size and a predetermined $SiO_2/Al_2O_3$ molar ratio. Here, the structure directing agent has a positive charge and the Al site in the zeolite skeleton (polysilicate ion) has a negative charge. Accordingly, the polysilicate ion is presumably attracted around the structure directing agent, thereby forming a crystal nucleus. As in the present invention, presumably since the dried aluminum hydroxide gel that is an Al source contained in the raw material composition is highly soluble in an alkali solution, in the initial stage of crystallization, a large number of stable crystal nuclei is generated. As a result, a zeolite, as a final product, has small variations in the particle size and the $SiO_2/Al_2O_3$ molar ratio.

The above-mentioned mechanism may be another mechanism as long as the above effect is achieved by the constitution of the present invention, and is not to be limitatively interpreted.

In the method for manufacturing a zeolite of the present invention, the alkali source is preferably at least one of potassium hydroxide and sodium hydroxide. The use of at least one of potassium hydroxide and sodium hydroxide as an alkali source enables to provide a zeolite having a comparatively large particle size.

In the method for manufacturing a zeolite of the present invention, the synthesis step preferably further includes adding a seed crystal of the zeolite to the raw material composition. The use of a seed crystal increases the crystallization rate of zeolite, thereby shortening the crystallization time in manufacturing of a zeolite to improve the yield.

In the method for manufacturing a zeolite of the present invention, the synthesized zeolite preferably has an average particle size of 0.3 to 6.0 $\mu$m. In the method for manufacturing a zeolite of the present invention, even a zeolite having a comparatively large particle size is manufactured in a manner as to have a small variation in the particle size.

In the method for manufacturing a zeolite of the present invention, the synthesized zeolite preferably has a $SiO_2/Al_2O_3$ molar ratio of 5 to 50. According to the method for producing a zeolite of the present invention, a zeolite having a predetermined $SiO_2/Al_2O_3$ molar ratio can be produced in a manner as to have a small variation in the $SiO_2/Al_2O_3$ molar ratio.

A honeycomb catalyst of the present invention includes a honeycomb unit having a plurality of through holes longitudinally formed in parallel with one another and a partition wall separating the through holes, wherein the honeycomb unit includes a zeolite and an inorganic binder, and the zeolite is manufactured by the method for manufacturing a zeolite of the present invention.

In the honeycomb catalyst of the present invention, a CHA zeolite is used to form a honeycomb unit, thereby improving the NOx converting performance. The zeolite manufactured by the method for manufacturing a zeolite of the present invention has small variations in the particle size and the $SiO_2/Al_2O_3$ molar ratio, and therefore is especially excellent in the NOx converting performance.

In the honeycomb catalyst of the present invention, when a zeolite having an average particle size of 0.3 to 6.0 $\mu$m or a zeolite having a $SiO_2/Al_2O_3$ molar ratio of 5 to 50 is used to form a honeycomb unit, the NOx converting performance is further improved. Especially, in a case where the zeolite has an average particle size of 0.3 to 6.0 $\mu$m, the pore size distribution of the partition walls is controlled within a predetermined range, so that gases to be converted are easily dispersed in the partition walls of the honeycomb catalyst and the NOx converting performance is improved.

In the honeycomb catalyst of the present invention, the honeycomb unit may further contain inorganic particles. The inorganic particles are preferably at least one selected from the group consisting of alumina, titania, and zirconia. Adjusting the particle size of inorganic particles as above also controls the average pore size of the partition walls within a predetermined range, thereby improving the NOx converting performance.

A method for manufacturing a honeycomb catalyst including a honeycomb unit having a plurality of through holes longitudinally formed in parallel with one another and a partition wall separating the through holes of the present invention includes the steps of: a molding step of molding a raw material paste containing a zeolite and an inorganic binder to form a honeycomb molded body including a plurality of through holes longitudinally formed in parallel with one another and a partition wall separating the through holes; and a firing step of firing the honeycomb molded body to prepare a honeycomb unit, the zeolite contained in the raw material paste being manufactured by the method for manufacturing a zeolite of the present invention.

As described above, the method for manufacturing a zeolite of the present invention enables to manufacture a zeolite having small variations in the particle size and in the $SiO_2/Al_2O_3$ molar ratio. Accordingly, the method for manufacturing a honeycomb catalyst of the present invention enables to manufacture a honeycomb catalyst excellent in the NOx converting performance.

A zeolite of the present invention is manufactured by the method for manufacturing a zeolite of the present invention.

As described above, the zeolite manufactured by the method for manufacturing a zeolite of the present invention has small variations in the particle size and the $SiO_2/Al_2O_3$ molar ratio.

- Advantageous Effects of Invention

The present invention can provide a method for manufacturing a CHA-structured zeolite having small variations in the particle size and in the $SiO_2/Al_2O_3$ molar ratio. A honeycomb catalyst including the zeolite manufactured by the method of the present invention is excellent in the NOx converting performance.

BRIEF DESCRIPTION OF DRAWINGS

Fig. 1 is a perspective view schematically illustrating one example of a honeycomb catalyst of the present invention.
Fig. 2 is a cross-sectional view schematically illustrating one example of an exhaust gas purifying apparatus of the present invention.
Fig. 3 is a perspective view schematically illustrating another example of the honeycomb catalyst of the present invention.
Fig. 4 is a perspective view schematically illustrating one example of a honeycomb unit included in the honeycomb catalyst illustrated in Fig. 3.
Fig. 5 shows XRD patterns of zeolites synthesized in Example 1, Comparative Example 1, and Comparative Example 2.
Figs. 6 (a) and 6(b) each show a SEM photograph of the zeolite synthesized in Example 1.
Figs 7 (a) and 7(b) each show a SEM photograph of the zeolite synthesized in Comparative Example 1.
Figs. 8(a) and 8(b) each show a SEM photograph of the zeolite synthesized in Comparative Example 2.
Fig. 9 is a graph showing a relationship between the solubility of an Al source and the SAR of the zeolite.

DESCRIPTION OF EMBODIMENTS

The following description specifically but non-limitatively discusses the present invention. The description may be appropriately modified to the extent that would not change the gist of the present invention.

A method for manufacturing a zeolite that is a CHA-structured aluminosilicate of the present invention includes a synthesis step of synthesizing a zeolite by reacting a raw material composition containing a Si source, an Al source, an alkali source, and a structure directing agent, the Al source being a dried aluminum hydroxide gel.

In the method for manufacturing a zeolite of the present invention, a raw material composition is first prepared, which contains a Si source, an Al source, an alkali source, and a structure directing agent.

The Si source refers to a compound, a salt, and a composition which may be a raw material of the silicon component of a zeolite.

Examples of the Si source include colloidal silica, amorphous silica, sodium silicate, tetraethyl orthosilicate, and an aluminosilicate gel. Two or more of these may be used in combination. Among these, preferred is colloidal silica as it provides a zeolite having a comparatively large particle size.

The Al source refers to a compound, a salt, and a composition which may be a raw material of the aluminum component of a zeolite.

In the method for manufacturing a zeolite of the present invention, a dried aluminum hydroxide gel is used as an Al source. The dried aluminum hydroxide gel has a high solubility in 100 g of a 1 mol/L aqueous potassium hydroxide solution. The solubility is preferably 2.0 g or more and more preferably 3.0 g or more. The solubility is preferably 7.8 g or less and more preferably 7.0 g or less.

A method for determining the solubility in 100 g of a 1 mol/L aqueous potassium hydroxide solution is described later in examples.

In the method for manufacturing a zeolite of the present invention, for manufacturing a target CHA zeolite, the $SiO_2/Al_2O_3$ molar ratio in the raw material composition is preferably set to 5 to 50 and more preferably set to 8 to 30.

Examples of the alkali source include sodium hydroxide, potassium hydroxide, rubidium hydroxide, cesium hydroxide, lithium hydroxide, alkali components in aluminate and silicate, and alkali components in the aluminosilicate gel. Two or more of these may be used in combination. Among these, preferred are potassium hydroxide and sodium hydroxide as they provide a zeolite having a comparatively large particle size.

The structure directing agent (hereafter, also referred to as a SDA) refers to an organic molecule defining the pore size and crystal structure of the zeolite. In accordance with the kind of the structure directing agent, the structure of the resulting zeolite is controlled.

The structure directing agent may be at least one selected from the group consisting of hydroxides, halides, carbonates, methyl carbonates, sulfonates, and nitrates which contain N, N, N-trialkyladamantane ammonium as a cation; and hydroxides, halides, carbonates, methyl carbonates, sulfonates, and nitrates which contain N,N,N-trimethyl benzyl ammonium ion, N-alkyl-3-quinuclidinol ion, or N,N,N-trialkyl exoaminonorbornane as a cation. Among these, preferably used is at least one selected from the group consisting of N,N,N-trimethyl adamantane ammonium hydroxide (hereafter, also referred to as TMAAOH), N,N,N-trimethyl adamantane ammonium halide, N,N,N-trimethyl adamantane ammonium carbonate, N,N,N-trimethyl adamantane ammonium methyl carbonate, and N,N,N-trimethyl adamantane ammonium sulfonate. More preferred is TMAAOH.

In the method for manufacturing a zeolite of the present invention, for manufacturing a target CHA zeolite, the $SDA/SiO_2$ molar ratio in the raw material composition is preferably set to 0.05 to 0.20, and more preferably set to 0.08 to 0.13.

In the method for manufacturing a zeolite of the present invention, a seed crystal of the zeolite is preferably further added to the raw material composition. The use of a seed crystal increases the crystallization rate of the zeolite, thereby shortening the crystallization time in manufacturing of the zeolite to improve the yield.

The seed crystal of the zeolite is preferably a seed crystal of a zeolite that is a CHA-structured aluminosilicate (CHA).

The $SiO_2/Al_2O_3$ molar ratio (SAR) in the seed crystal of the zeolite is preferably 5 to 50 and more preferably 8 to 30.

The amount of the seed crystal of the zeolite is preferably small. In consideration of the reaction speed and the effect of suppressing impurities, the amount is preferably 0.1 to 20% by mass and more preferably 0.5 to 15% by mass relative to the amount of the silica component contained in the raw material composition.

In the method for manufacturing a zeolite of the present invention, regardless of the presence of the seed crystal of the zeolite, water is preferably further added to the raw material composition.

In the method for manufacturing a zeolite of the present invention, the prepared raw material composition is reacted to synthesize a zeolite. Specifically, a zeolite is preferably synthesized by hydrothermal synthesis of the raw material composition.

The reaction vessel used for hydrothermal synthesis is not particularly limited as long as it is usable for conventional hydrothermal synthesis, and may be a heat and pressure-resistant vessel (e.g., autoclave). The raw material composition charged into a reaction vessel is sealed and heated, thereby crystallizing a zeolite.

In synthesis of a zeolite, the raw material mixture may be in a stationary state but is preferably under stirring.

The heating temperature in synthesis of a zeolite is preferably 100 to 200°C and more preferably 120 to 180°C. If the heating temperature is lower than 100°C, the crystallization rate may be slow, and the yield tends to lower. If the heating temperature is higher than 200°C, impurities tend to be generated.

The heating time in synthesis of a zeolite is preferably 10 to 200 hours. If the heating time is shorter than 10 hours, unreacted raw materials may remain, and the yield tends to lower. If the heating time is longer than 200 hours, the yield or crystallizability is not any more improved.

The pressure applied in synthesis of a zeolite is not particularly limited and may be a pressure generated during heating of the raw material composition in the sealed vessel within the above temperature range. If necessary, an inert gas (e.g., nitrogen gas) may be added to increase the pressure.

In the method for manufacturing a zeolite of the present invention, after synthesis, the zeolite is preferably sufficiently cooled, solid-liquid separated, washed with an adequate amount of water, and dried. The drying temperature is not particularly limited and may be any temperature within a range of 100 to 150°C.

The synthesized zeolite contains the SDA and/or an alkali metal in pores, and these may be removed, if needed. For example, the SDA and/or an alkali metal can be removed by liquid phase treatment using an acidic solution or a liquid chemical containing a SDA-decomposing component, or exchange treatment using a resin or thermal decomposition.

By the above process, a zeolite that is a CHA-structured aluminosilicate can be manufactured. The zeolite manufactured by the method for manufacturing a zeolite of the present invention is also encompassed by the present invention.

The zeolite manufactured by the method for manufacturing a zeolite of the present invention is a zeolite that is a CHA-structured aluminosilicate.

The crystal structure of the zeolite is analyzed with an X-ray diffraction apparatus (XRD).

The zeolite manufactured by the method for manufacturing a zeolite of the present invention has an average particle size of preferably 0.3 to 6.0 $\mu$m, more preferably 0.5 to 5.0 $\mu$m, and still more preferably 0.7 to 4.0 $\mu$m. The use of a zeolite having such an average particle size for manufacturing a honeycomb catalyst can increase the pore size of a honeycomb unit (pore size of macropores inside the partition wall), lower the capillary stress at the time of water absorption, and improve the NOx converting performance by gas diffusion.

The average particle size of the zeolite is the average particle size of primary particles measured by scanning electron microscopy (SEM).

The zeolite manufactured by the method for manufacturing a zeolite of the present invention has a $SiO_2/Al_2O_3$ molar ratio (SAR) of preferably 5 to 50 and more preferably 8 to 30. If the $SiO_2/Al_2O_3$ molar ratio is less than 5, the resulting zeolite is less likely to have durability that is required when used as a catalyst or an absorbent. If the $SiO_2/Al_2O_3$ molar ratio is more than 50, the number of acid sites of the zeolite is reduced, and such a zeolite has insufficient solid acidity that is required when the zeolite is used as a catalyst or absorbent.

The $SiO_2/Al_2O_3$ molar ratio of the zeolite is determined by fluorescence X-ray analysis (XRF).

The zeolite manufactured by the method for manufacturing a zeolite of the present invention has a specific surface area of preferably 500 to 750 $m^2/g$ and more preferably 550 to 700 $m^2/g$ in terms of the crystal structure.

The zeolite manufactured by the method for manufacturing a zeolite of the present invention can be suitably used as a catalyst, an absorbent, and an ion exchanger. Among these, a honeycomb catalyst formed using the zeolite manufactured by the method for manufacturing a zeolite of the present invention is also encompassed by the present invention.

The honeycomb catalyst of the present invention is a honeycomb catalyst including a honeycomb unit having a plurality of through holes longitudinally formed in parallel with one another and a partition wall separating the through holes, wherein the honeycomb unit includes a zeolite and an inorganic binder, and the zeolite is manufactured by the method for manufacturing a zeolite of the present invention.

Fig. 1 is a perspective view schematically illustrating one example of a honeycomb catalyst of the present invention.

A honeycomb catalyst 10 illustrated in Fig. 1 includes a single honeycomb unit 11 including a plurality of through holes 11a longitudinally formed in parallel with one another and a partition wall 11b separating the through holes. On the peripheral surface of the honeycomb unit 11, a peripheral coat layer 12 is formed. The honeycomb unit 11 includes a zeolite and an inorganic binder.

In the honeycomb catalyst of the present invention, the zeolite contained in the honeycomb unit is a zeolite manufactured by the method for manufacturing a zeolite of the present invention, and is a zeolite (CHA) that is a CHA-structured aluminosilicate.

The $SiO_2/Al_2O_3$ molar ratio (SAR) of the CHA is preferably 5 to 50 and more preferably 18 to 30. If the molar ratio is less than 5, the amount of Al is too large and heat deterioration tends to occur. If the molar ratio is more than 50, the acid sites of the zeolite are reduced, possibly lowering the NOx converting performance.

The average particle size of the CHA is preferably 0.3 to 6.0 $\mu$m, more preferably 0.5 to 5.0 $\mu$m, and still more preferably 0.7 to 4.0 $\mu$m. The CHA having an average particle size within a range of 0.3 to 6.0 $\mu$m can increase the pore size of a honeycomb unit, lower the capillary stress at the time of water absorption, and improve the NOx converting performance by gas diffusion.

The pore size distribution of the honeycomb unit includes a peak of micropores derived from the zeolite and a peak of macropores inside the partition walls. As used herein, the (average) pore size of the honeycomb unit refers to the (average) pore size of macropores. The average pore size of the honeycomb unit can be measured by mercury porosimetry.

The specific surface area of the CHA is preferably 500 to 750 $m^2/g$ and more preferably 550 to 700 $m^2/g$ in terms of the crystal structure.

The honeycomb unit has a CHA content of preferably 40 to 75 vol%, more preferably 45 to 70 vol%, and still more preferably 50 to 65 vol%. If the CHA content is less than 40 vol%, the NOx converting performance is lowered. If the CHA content is more than 75 vol%, the honeycomb unit tends to be damaged by water absorption/dehydration or a thermal stress.

In the honeycomb catalyst of the present invention, the honeycomb unit may contain a zeolite other than the CHA and silicoaluminophosphate (SAPO) to the extent that these would not impair the effects of the present invention.

In the honeycomb catalyst of the present invention, the zeolite (CHA) is preferably ion-exchanged with copper ions. In this case, the honeycomb unit contains copper ions in an amount of preferably 5.5 to 7.5 g/L and more preferably 6.0 to 7.5 g/L based on the apparent volume of the honeycomb unit. In such a case, the NOx converting performance is improved when the temperature of exhaust gases is low, and lowering of the NOx converting performance due to ammonia oxidation when the temperature of exhaust gases is high is suppressed. Consequently, the NOx converting performance is high throughout the entire temperature range.

In the honeycomb catalyst of the present invention, the honeycomb unit contains the zeolite (CHA) in an amount of preferably 150 to 250 g/L and more preferably 180 to 230 g/L based on the apparent volume of the honeycomb unit. In such a case, the NOx converting performance is improved when the temperature of exhaust gases is low, and lowering of the NOx converting performance due to ammonia oxidation when the temperature of exhaust gases is high is suppressed. Consequently, the NOx converting performance is high throughout the entire temperature range.

In the honeycomb catalyst of the present invention, the inorganic binder contained in the honeycomb unit is not particularly limited, and preferable examples thereof include solid contents of alumina sol, silica sol, titania sol, water glass, sepiolite, attapulgite, and boehmite from the standpoint of maintaining the strength as a honeycomb catalyst. Two or more of these may be used in combination.

The amount of the inorganic binder in the honeycomb unit is preferably 3 to 30 vol% and more preferably 5 to 20 vol%. If the amount of the inorganic binder is less than 3 vol%, the strength of the honeycomb unit is lowered. If the amount of the inorganic binder is more than 30 vol%, the zeolite content in the honeycomb unit is reduced, lowering the NOx converting performance.

In the honeycomb catalyst of the present invention, the honeycomb unit may further contain inorganic particles for adjusting the pore size of the honeycomb unit.

The inorganic particles contained in the honeycomb unit are not particularly limited, and examples thereof include particles made of alumina, titania, zirconia, silica, ceria, and magnesia. Two or more of these may be used in combination. The inorganic particles are preferably particles of at least one selected from the group consisting of alumina, titania, and zirconia, and more preferably particles of one selected from the group consisting of alumina, titania, and zirconia.

The inorganic particles have an average particle size of preferably 0.1 to 5.0 $\mu$m, more preferably 0.3 to 4.5 $\mu$m, and still more preferably 0.5 to 4.0 $\mu$m. When the inorganic particles have an average particle size of 0.1 to 5.0 $\mu$m, the pore size of the honeycomb unit can be adjusted.

The average particle size of the inorganic particles is a particle size (Dv50) corresponding to a 50% integral value in the grain size distribution (in volume base) determined by a laser diffraction/scattering method.

In the honeycomb catalyst of the present invention, a preferred combination is the CHA having an average particle size of 0.1 to 2.0 $\mu$m and the inorganic particles having an average particle size of 0.1 to 5.0 $\mu$m. A more preferred combination is the CHA having an average particle size of 0.3 to 1. 8 $\mu$m and the inorganic particles having an average particle size of 0.3 to 4.5 $\mu$m. A still more preferred combination is the CHA having an average particle size of 0.7 to 1.7 $\mu$m and the inorganic particles having an average particle size of 0.5 to 4.0 $\mu$m.

In the above combinations, the average particle size of the inorganic particles is preferably 1/5 to 50 times, more preferably 1/3 to 30 times, and still more preferably 1/2 to 10 times the average particle size of the CHA.

In particular, preferably, the average particle size of the inorganic particles is larger than the average particle size of the CHA and is not larger than four times the average particle size of the CHA.

For example, in a case where the CHA has an average particle size of 0.1 $\mu$m, the inorganic particles have an average particle size of preferably 0.1 to 0.4 $\mu$m. In a case where the CHA has an average particle size of 1.5 $\mu$m, the inorganic particles have an average particle size of preferably 1.5 to 6.0 $\mu$m.

The amount of the inorganic particles in the honeycomb unit is preferably 8 to 40 vol%, more preferably 10 to 35 vol%, and still more preferably 15 to 25 vol%. If the amount of the inorganic particles is less than 8 vol%, the amount of the CHA is too large and the honeycomb unit tends to be damaged by a thermal stress. If the amount of the inorganic particles is more than 40 vol%, the amount of the CHA is reduced, lowering the NOx converting performance.

The CHA and the inorganic particles have a volume ratio (CHA: inorganic particles) of preferably 50:50 to 90:10, more preferably 60:40 to 80:20, and still more preferably 70:30 to 80:20. With the volume ratio of the CHA and the inorganic particles within the above range, the pore size of the honeycomb unit can be adjusted while the NOx converting performance is maintained.

In the honeycomb catalyst of the present invention, preferably, the honeycomb unit further contains at least one selected from the group consisting of inorganic fibers, scale-like materials, tetrapod-shaped materials, and three-dimensional needle-shaped materials for the purpose of enhancing the strength.

The inorganic fibers contained in the honeycomb unit are preferably made of at least one selected from the group consisting of alumina, silica, silicon carbide, silica alumina, glass, potassium titanate, and aluminum borate. The scale-like materials contained in the honeycomb unit are preferably made of at least one selected from the group consisting of glass, white mica, alumina, and silica. The tetrapod-shaped materials contained in the honeycomb unit are preferably made of zinc oxide. The three-dimensional needle-shaped materials contained in the honeycomb unit are preferably made of at least one selected from the group consisting of alumina, silica, silicon carbide, silica alumina, glass, potassium titanate, aluminum borate, and boehmite. All of these materials have high heat resistance and, when used as catalyst carriers in the SCR system, are less likely to have erosion so as to maintain the effect as reinforcing materials.

The inorganic fibers contained in the honeycomb unit have an aspect ratio of preferably 2 to 300, more preferably 5 to 200, and still more preferably 10 to 100. If the aspect ratio of the inorganic fibers is less than 2, the effect of improving the strength of the honeycomb unit is lowered. If the aspect ratio of the inorganic fibers is more than 300, the die may be clogged at the time of extrusion molding of the honeycomb unit, and the inorganic fibers break to lower the effect of improving the strength of the honeycomb unit.

The scale-like materials refers to flat materials which preferably have a thickness of 0.2 to 5.0 μm, a maximum length of 10 to 160 μm, and a ratio of the maximum length to the thickness of 3 to 250.

The tetrapod-shaped materials refer to materials having needle-shaped parts extending three-dimensionally, the needle-shaped parts preferably having an average needle length of 5 to 30 μm and an average diameter of 0.5 to 5.0 μm.

The three-dimensional needle-shaped materials refer to materials including needle-shaped parts that are combined to each other by an inorganic compound (e.g., glass) at and near the center area of each needle-shaped part. Needle shaped parts preferably have an average needle length of 5 to 30 μm, and an average diameter of 0.5 to 5.0 μm.

The three-dimensional needle-shaped materials may include a plurality of three-dimensionally-connected needle-shaped parts. Each needle-shaped part preferably has a diameter of 0.1 to 5.0 μm, a length of 0.3 to 30.0 μm, and a ratio of the length to the diameter of 1.4 to 50.0.

The amount of the inorganic fibers, the scale-like materials, the tetrapod-shaped materials, and the three-dimensional needle-shaped materials in the honeycomb unit is preferably 3 to 50 vol%, more preferably 3 to 30 vol%, and still more preferably 5 to 20 vol%. If the amount is less than 3 vol%, the effect of improving the strength of the honeycomb unit is lowered. If the amount is more than 50 vol%, the zeolite content in the honeycomb unit is reduced, lowering the NOx converting performance.

In the honeycomb catalyst of the present invention, the honeycomb unit preferably has a porosity of 40 to 70%. If the porosity of the honeycomb unit is less than 40%, exhaust gases are less likely to permeate inside the partition walls of the honeycomb unit, so that the zeolite is not effectively used in conversion of NOx. If the porosity of the honeycomb unit is more than 70%, the strength of the honeycomb unit is insufficient.

The porosity of the honeycomb unit can be determined by the Archimedes method.

In the honeycomb catalyst of the present invention, the cross section orthogonal to the longitudinal direction of the honeycomb unit preferably has an aperture ratio of 50 to 75%. If the aperture ratio of the cross section orthogonal to the longitudinal direction of the honeycomb unit is less than 50%, the zeolite is not effectively used in conversion of NOx. If the aperture ratio of the cross section orthogonal to the longitudinal direction of the honeycomb unit is more than 75%, the strength of the honeycomb unit is insufficient.

In the honeycomb catalyst of the present invention, the cross section orthogonal to the longitudinal direction of the honeycomb unit preferably has a through-hole density of 31 to 155 pcs/cm$^2$. If the through-hole density of the cross section orthogonal to the longitudinal direction of the honeycomb unit is less than 31 pcs/cm$^2$, the zeolite and exhaust gases are less likely to contact each other, lowering the NOx converting performance. If the through-hole density of the cross section orthogonal to the longitudinal direction of the honeycomb unit is more than 155 pcs/cm$^2$, the pressure loss of the honeycomb catalyst increases.

In the honeycomb catalyst of the present invention, the partition walls of the honeycomb unit have a thickness of preferably 0.1 to 0.4 mm, and more preferably 0.1 to 0.3 mm. If the partition wall of the honeycomb unit has a thickness of less than 0.1 mm, the strength of the honeycomb unit is lowered. If the partition wall of the honeycomb unit has a thickness of more than 0.4 mm, exhaust gases are less likely to permeate inside the partition walls of the honeycomb unit, so that the zeolite is not effectively used in conversion of NOx.

In the honeycomb catalyst of the present invention, when a peripheral coat layer is formed on the honeycomb unit, the peripheral coat layer preferably has a thickness of 0.1 to 2.0 mm. If the peripheral coat layer has a thickness of less than 0.1 mm, the effect of improving the strength of the honeycomb catalyst is insufficient. If the peripheral coat layer has a thickness of more than 2.0 mm, the zeolite content per unit volume of the honeycomb catalyst is reduced, lowering the NOx converting performance.

The shape of the honeycomb catalyst of the present invention is not limited to a round pillar shape and may be a rectangular pillar shape, a cylindroid shape, a pillar shape with a racetrack end face, or a round-chamfered polygonal pillar shape (e.g., round-chamfered triangular pillar shape).

In the honeycomb catalyst of the present invention, the shape of the through holes is not limited to a rectangular pillar shape, but may be a triangular pillar shape or a hexagonal pillar shape.

Next, a description is given on the method for manufacturing a honeycomb catalyst of the present invention. The method for manufacturing a honeycomb catalyst of the present invention is a method for manufacturing a honeycomb catalyst including a honeycomb unit having a plurality of through holes longitudinally formed in parallel with one another and a partition wall separating the through holes, the method including the steps of: a molding step of molding a raw material paste containing a zeolite and an inorganic binder to form a honeycomb molded body including a plurality of through holes longitudinally formed in parallel with one another and a partition wall separating the through holes; and a firing step of firing the honeycomb molded body to prepare a honeycomb unit, the zeolite contained in the raw material paste being manufactured by the method for manufacturing a zeolite of the present invention.

In the following, a description is given on one example of a method for manufacturing a honeycomb catalyst 10 illustrated in Fig. 1.

First, a raw material paste is prepared which contains zeolite, an inorganic binder, and if necessary, inorganic particles and at least one selected from the group consisting of inorganic fibers, scale-like materials, tetrapod-shaped materials, and three-dimensional needle-shaped materials. The raw material paste is extrusion-molded to provide a round pillar-shaped honeycomb molded body including a plurality of through holes longitudinally formed in parallel with one another and a partition wall separating the through holes (molding step).

The zeolite contained in the raw material paste can be manufactured by the method for manufacturing a zeolite of the present invention. The description on the structure of the zeolite (CHA) is omitted here as it has already been given.

In addition, the descriptions on the inorganic fibers, inorganic particles, and the like contained in the raw material paste are also omitted here as they have already been given.

The inorganic binder contained in the raw material paste is not particularly limited, and examples thereof include alumina sol, silica sol, titania sol, water glass, sepiolite, attapulgite, and boehmite. Two or more of these may be used in combination.

The raw material paste may optionally contain an organic binder, a dispersing medium, a forming auxiliary, and the like.

The organic binder is not particularly limited, and examples thereof include methyl cellulose, carboxy methyl cellulose, hydroxyethyl cellulose, polyethylene glycol, phenolic resins, and epoxy resins. Two or more of these may be used in combination. The amount of the organic binder is preferably 1 to 10% relative to the total amount of the zeolite, inorganic particles, inorganic binder, inorganic fibers, scale-like material, tetrapod-shaped material, and three-dimensional needle-shaped material.

The dispersing medium is not particularly limited, and examples thereof include water, organic solvents (e.g., benzene) and alcohols (e.g., methanol). Two or more of these may be used in combination.

The forming auxiliary is not particularly limited, and examples thereof include ethylene glycol, dextrin, fatty acid, fatty acid soap, and polyalcohol. Two or more of these may be used in combination.

The raw material paste may optionally contain a pore-forming material.

The pore-forming material is not particularly limited, and examples thereof include polystyrene particles, acrylic particles and starch. Two or more of these may be used in combination. Among these, preferred are polystyrene particles.

Controlling the particle size of the CHA and the pore-forming material enables control of the pore size distribution of the partition wall within a predetermined range.

For example, in a case where the CHA has an average particle size of 0.1 $\mu$m, adding a pore-forming material having an average particle size of 0.1 to 3 $\mu$m in an amount of 10 to 30% relative to the volume of the added CHA controls the average pore size of the partition wall to 0.05 to 0.2 $\mu$m. In a case where the CHA has an average particle size of 1.2 $\mu$m, a pore-forming material does not need to be added.

Even in a case where a pore-forming material is not added, controlling the particle size of the CHA and the inorganic particles enables control of the pore size distribution of the partition wall within a predetermined range.

When the raw material paste is prepared, the respective components are preferably mixed or kneaded, and they may be mixed using a mixer or attritor or kneaded with a kneader.

Next, the honeycomb molded body is dried using a dryer (e.g., microwave dryer, hot air dryer, dielectric dryer, decompression dryer, vacuum dryer, freeze dryer) to provide a honeycomb dried body.

The honeycomb dried body is degreased to provide a honeycomb degreased body. The degreasing condition may be appropriately determined in accordance with the kind and amount of the organic substance contained in the honeycomb dried body, and is preferably 200 to 500°C for 2 to 6 hours.

In the present description, the honeycomb molded body, the honeycomb dried body, and the honeycomb degreased body before the firing step are also collectively referred to as a honeycomb molded body.

Next, the honeycomb degreased body is fired to provide a round pillar-shaped honeycomb unit 11 (firing step). The firing temperature is preferably 600 to 1000°C and more preferably 600 to 800°C. If the firing temperature is lower than 600°C, the sintering does not proceed well, resulting in poor strength of the honeycomb unit 11. If the firing temperature is higher than 1000°C, the sintering proceeds too much, reducing the reaction sites of the zeolite.

Next, a peripheral coat layer paste is applied to the peripheral surfaces, except for the both end faces, of the round pillar-shaped honeycomb unit 11.

The peripheral coat layer paste is not particularly limited, and examples thereof include a mixture of an inorganic binder and inorganic particles, a mixture of an inorganic binder and inorganic fibers, and a mixture of an inorganic binder, inorganic particles, and inorganic fibers.

The inorganic binder contained in the peripheral coat layer paste is not particularly limited, and may be added in the form of a silica sol or an alumina sol. Two or more of the inorganic binders may be used in combination. In particular, the inorganic binder used is preferably in the form of a silica sol.

The inorganic particles contained in the peripheral coat layer paste are not particularly limited, and examples thereof include oxide particles made of zeolite, eucryptite, alumina, silica, or the like; carbide particles made of silicon carbide or the like; and nitride particles made of silicon nitride, boron nitride, or the like. Two or more of these may be used in combination. In particular, preferred are eucryptite particles, which have a thermal expansion coefficient similar to that of the honeycomb unit.

The inorganic fibers contained in the peripheral coat layer paste are not particularly limited, and examples thereof include silica alumina fibers, mullite fibers, alumina fibers, and silica fibers. Two or more of these may be used in combination. In particular, preferred are alumina fibers.

The peripheral coat layer paste may further contain an organic binder.

The organic binder contained in the peripheral coat layer paste is not particularly limited, and examples thereof include polyvinyl alcohol, methyl cellulose, ethyl cellulose, and carboxy methyl cellulose. Two or more of these may be used in combination.

The peripheral coat layer paste may further contain balloons that are fine hollow spheres of an oxide ceramic, a pore-forming material, and the like.

The balloons contained in the peripheral coat layer paste are not particularly limited, and examples thereof include alumina balloons, glass microballoons, sirasu balloons, fly ash balloons, and mullite balloons. Two or more of these may be used in combination. Among these, preferred are alumina balloons.

The pore-forming material contained in the peripheral coat layer paste is not particularly limited, and examples thereof include spherical acrylic particles and graphite. Two or more of these may be used in combination.

Next, the honeycomb unit 11 with the peripheral coat layer paste applied thereto is dried so that the paste is solidified, thereby providing the round pillar-shaped honeycomb catalyst 10. In a case where the peripheral coat layer paste contains an organic binder, degreasing is preferably performed. The degreasing condition may be appropriately determined in accordance with the kind and amount of the organic material, and is preferably 500°C for one hour.

The honeycomb unit 11 or the honeycomb catalyst 10 may be immersed in an aqueous solution containing copper ions so that the zeolite is ion-exchanged. Alternatively, a raw material paste used may contain a zeolite ion-exchanged with copper ions.

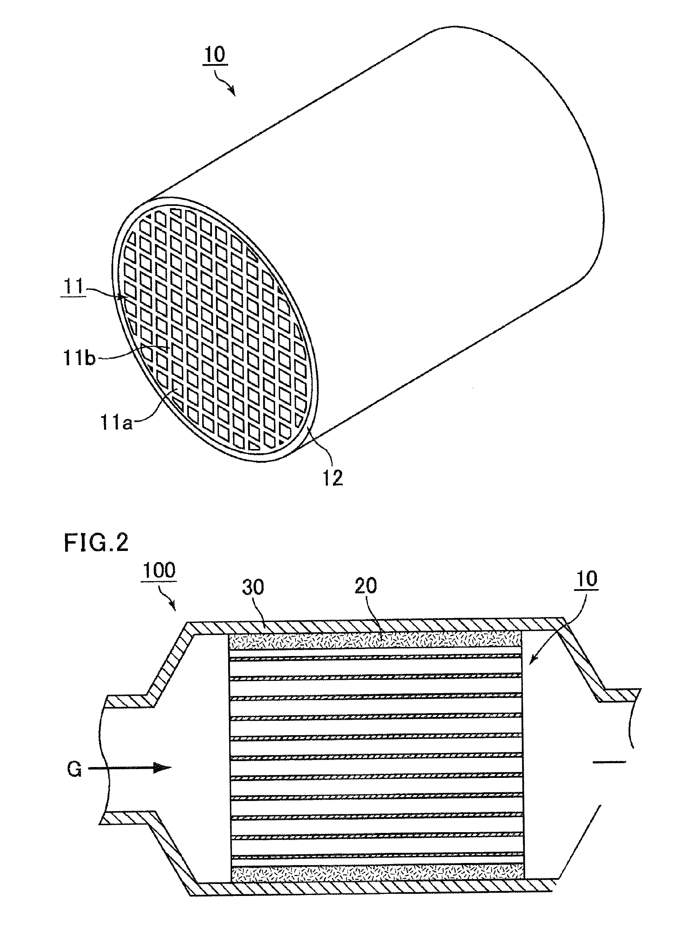

Fig. 2 is a cross-sectional view schematically illustrating one example of an exhaust gas purifying apparatus of the present invention.

An exhaust gas purifying apparatus 100 illustrated in Fig. 2 can be manufactured by canning the honeycomb catalyst 10 and a holding sealing material 20 arranged on the peripheral portion of the honeycomb catalyst 10 in a metallic container (shell) 30. In the exhaust gas purifying apparatus 100, a spraying means (not illustrated), such as a spraying nozzle, for spraying ammonia or a compound to be decomposed to generate ammonia is provided inside a piping (not illustrated) at an upstream side of the honeycomb catalyst 10 relative to the flow direction of exhaust gases (in Fig. 2, exhaust gases are indicated by G and the flow direction thereof is indicated by arrows). With this configuration, since ammonia is added to the exhaust gases flowing inside the piping, the zeolite contained in the honeycomb unit 11 reduces NOx in the exhaust gases.

The compound to be decomposed to generate ammonia is not particularly limited as long as it is hydrolized inside the piping to generate ammonia. Preferred is urea water as it is excellent in storage stability.

The urea water is heated by exhaust gases inside the piping to be hydrolized, thereby generating ammonia.

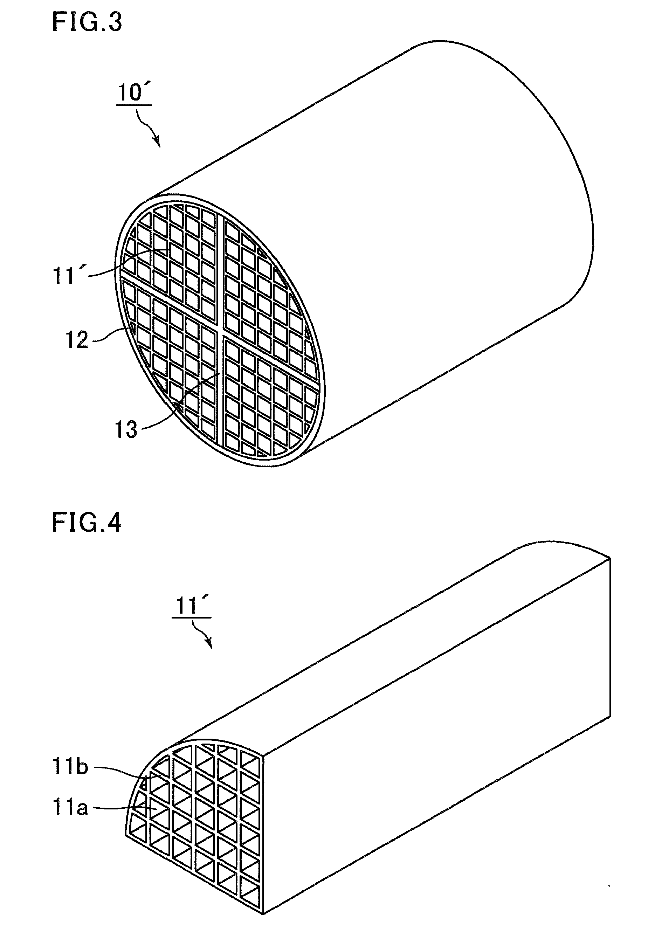

Fig. 3 is a perspective view schematically illustrating another example of the honeycomb catalyst of the present invention.

Fig. 4 is a perspective view schematically illustrating one example of the honeycomb unit included in the honeycomb catalyst illustrated in Fig. 3.

A honeycomb catalyst 10' illustrated in Fig. 3 has the same configuration as the honeycomb catalyst 10, except that a plurality of honeycomb units 11' (see Fig. 4) including a plurality of through holes 11a longitudinally formed in parallel with one another and a partition wall 11b separating the through holes are bonded through an adhesive layer 13.

The cross section orthogonal to the longitudinal direction of the honeycomb unit 11' preferably has an area of 10 to 200 cm². If the cross-sectional area is less than 10 cm², the honeycomb catalyst 10' has a greater pressure loss. If the cross-sectional area is more than 200 cm², the honeycomb units 11' are hardly bonded to one another.

The honeycomb unit 11' has the same configuration as the honeycomb unit 11, except for the area of the cross section orthogonal to the longitudinal direction.

The adhesive layer 13 preferably has a thickness of 0.1 to 3.0 mm. If the adhesive layer 13 has a thickness of less than 0.1 mm, the bonding strength of the honeycomb units 11' is insufficient. If the adhesive layer 13 has a thickness of more than 3.0 mm, the honeycomb catalyst 10' may have a greater pressure loss or cracks may occur in the adhesive layer.

Next, a description is given on one example of the method for manufacturing the honeycomb catalyst 10' illustrated in Fig. 3.

First, sectorial pillar-shaped honeycomb units 11' are manufactured in the same manner as in case of the honeycomb unit 11 included in the honeycomb catalyst 10. Next, an adhesive layer paste is applied to the peripheral surfaces of the honeycomb units 11', except for the surfaces on the arc side, and the honeycomb units 11' are bonded. The honeycomb units 11' are dried so that the paste is solidified, thereby providing an aggregated body of the honeycomb units 11'.

The adhesive layer paste is not particularly limited, and examples thereof include a mixture of an inorganic binder and inorganic particles, a mixture of an inorganic binder and inorganic fibers, and a mixture of an inorganic binder, inorganic particles, and inorganic fibers.

The inorganic binder contained in the adhesive layer paste is not particularly limited, and may be added in the form of a silica sol or an alumina sol. Two or more of the inorganic binders may be used in combination. In particular, the inorganic binder is preferably added in the form of a silica sol.

The inorganic particles contained in the adhesive layer paste are not particularly limited, and examples thereof include oxide particles made of zeolite, eucryptite, alumina, silica, or the like; carbide particles made of silicon carbide or the like; and nitride particles made of silicon nitride, boron nitride, or the like. Two or more of these may be used in combination. In particular, preferred are eucryptite particles as they have a thermal expansion coefficient similar to that of the honeycomb unit.

The inorganic fibers contained in the adhesive layer paste are not particularly limited, and examples thereof include silica alumina fibers, mullite fibers, alumina fibers, and silica fibers. Two or more of these may be used in combination. In particular, preferred are alumina fibers.

The adhesive layer paste may further contain an organic binder.

The organic binder contained in the adhesive layer paste is not particularly limited, and examples thereof include polyvinyl alcohol, methyl cellulose, ethyl cellulose, and carboxy methyl cellulose. Two or more of these may be used in combination.

The adhesive layer paste may further contain balloons that are fine hollow spheres of oxide ceramic, and a pore-forming material.

The balloons contained in the adhesive layer paste are not particularly limited, and examples thereof include alumina balloons, glass microballoons, sirasu balloons, fly ash balloons, and mullite balloons. Two or more of these may be used in combination. In particular, preferred are alumina balloons.

The pore-forming material contained in the adhesive layer paste is not particularly limited, and examples thereof include spherical acrylic particles and graphite. Two or more of these may be used in combination.

For the purpose of enhancing the circularity, the aggregated body of the honeycomb units 11' is optionally cut and ground, thereby providing a round pillar-shaped aggregated body of the honeycomb units 11'.

Next, a peripheral coat layer paste is applied to the peripheral faces, except for both end faces, of the round pillar-shaped aggregated body of the honeycomb units 11'.

The peripheral coat layer paste may be the same as or different from the adhesive layer paste.

Next, the round pillar-shaped aggregated body of the honeycomb units 11' with the peripheral coat layer paste applied thereto is dried so that the paste is solidified, thereby providing the round pillar-shaped honeycomb catalyst 10'. At this time, in a case where the adhesive layer paste and/or the peripheral coat layer paste contains an organic binder, degreasing is preferably performed. The degreasing condition may be appropriately determined in accordance with the kind and the amount of the organic substance, and is preferably 500°C for one hour.

Here, the honeycomb catalyst 10' includes four pieces of the honeycomb units 11' bonded to one another with the adhesive layer 13 therebetween. It is to be noted that the number of honeycomb units included in a honeycomb catalyst is not particularly limited. For example, 16 pieces of rectangular pillar-shaped honeycomb units may be bonded to one another with an adhesive layer therebetween to form a round pillar-shaped honeycomb catalyst.

The honeycomb catalysts 10 and 10' may not have the peripheral coat layer 12.

In the following, a description is given on the effects of the present invention.

In the method for manufacturing a zeolite of the present invention, the use of a dried aluminum hydroxide gel as an Al source having a higher solubility than a conventional Al source enables to reduce the variations in the particle size and the $SiO_2/Al_2O_3$ molar ratio of the synthesized zeolite.

In the honeycomb catalyst of the present invention, formation of a honeycomb unit using a CHA zeolite can improve the NOx converting performance. Moreover, since the variations in the particle size and the $SiO_2/Al_2O_3$ molar ratio are small, the zeolite manufactured by the method for manufacturing a zeolite of the present invention is especially excellent in the NOx converting performance.

As described above, the method for manufacturing a zeolite of the present invention enables to manufacture a zeolite having small variations in the particle size and the $SiO_2/Al_2O_3$ molar ratio. Accordingly, the method for manufacturing a honeycomb catalyst of the present invention enables to manufacture a honeycomb catalyst excellent in the NOx converting performance.

The zeolite of the present invention has small variations in the particle size and the $SiO_2/Al_2O_3$ molar ratio.

EXAMPLES

Examples more specifically describing the present invention are given in the following. It is to be noted that the present invention is not limited only to these examples.

[Example 1]

A raw material composition was prepared by mixing colloidal silica (manufactured by NISSAN CHEMICAL INDUSTRIES, LTD., SNOWTEX 30) as a Si source, a dried aluminum hydroxide gel (manufactured by Strem Chemicals) as an Al source, potassium hydroxide (manufactured by TOAGOSEI CO., LTD.) as an alkali source, a 25% aqueous solution of N,N,N-trimethyl adamantane ammonium hydroxide (TMAAOH) (manufactured by Sachem) as a structure directing agent(SDA), SSZ-13(SAR=30, manufactured by BASF SE) as a seed crystal, and deionized water. The raw material composition had a molar ratio of $SiO_2$: 30 mol, $Al_2O_3$: 1.0 mol, $K_2O$: 3.0 mol, TMAAOH: 2.4 mol, and $H_2O$: 390 mol. The amount of the seed crystal added was 5% by mass relative to the total amount of silica, alumina, and potassium oxide in the raw material composition.
The raw material composition was charged into a 200-mL autoclave and subjected to hydrothermal synthesis at a stirring speed of 10 rpm and a heating temperature of 160°C for a heating time of 24 hours, thereby synthesizing a zeolite.

[Comparative Example 1]

A raw material composition was prepared by mixing colloidal silica (manufactured by NISSAN CHEMICAL INDUSTRIES, LTD., SNOWTEX 30) as a Si source, aluminum hydroxide (manufactured by Nippon Light Metal Co., Ltd., B53) as an Al source, potassium hydroxide (manufactured by TOAGOSEI CO., LTD.) as an alkali source, a 25% aqueous solution of N,N,N-trimethyl adamantane ammonium hydroxide (TMAAOH) (manufactured by Sachem) as a structure directing agent (SDA), SSZ-13 (SAR=30, manufactured by BASF SE) as a seed crystal, and deionized water. The raw material composition had a molar ratio of $SiO_2$: 30 mol, $Al_2O_3$: 1.0 mol, $K_2O$: 3.0 mol, TMAAOH: 3.0 mol, and $H_2O$: 360 mol. The amount of the added seed crystal was 5% by mass relative to the total amount of the silica, alumina, and potassium oxide in the raw material composition.
The raw material composition was subjected to hydrothermal synthesis under the same condition as that in Example 1, thereby synthesizing a zeolite.

[Comparative Example 2]

A raw material composition was prepared by mixing colloidal silica (manufactured by NISSAN CHEMICAL INDUSTRIES, LTD., SNOWTEX 30) as a Si source, pseudo-boehmite (manufactured by Tomita Pharmaceutical Co., Ltd., AD220T) as an Al source, potassium hydroxide (manufactured by TOAGOSEI CO., LTD.) as an alkali source, a 25% aqueous solution of N,N,N-trimethyl adamantane ammonium hydroxide (TMAAOH) (manufactured by Sachem) as a structure directing agent (SDA), SSZ-13 (SAR=30, manufactured by BASF SE) as a seed crystal, and deionized water. The raw material composition had a molar ratio of $SiO_2$: 30 mol, $Al_2O_3$: 1.0 mol, $K_2O$: 3.0 mol, TMAAOH: 3.0 mol, and $H_2O$: 360 mol. The amount of the added seed crystal was 5% by mass relative to the total amount of the silica, alumina, and potassium oxide in the raw material composition.
The raw material composition was subjected to hydrothermal synthesis under the same condition as that in Example 1, thereby synthesizing a zeolite.

[Measurement of solubility of Al source]

Measurement of the solubility in 100 g of a 1 mol/L aqueous potassium hydroxide solution by the following method was performed on the Al sources (dried aluminum hydroxide gel, aluminum hydroxide, pseudo-boehmite) used in Example 1, Comparative Example 1, and Comparative Example 2. The measurement of the solubility was performed at a room temperature (23°C).
An amount of 1% by mass of the Al source was charged into an Erlenmeyer flask containing 100 g of a 1 mol/L aqueous potassium hydroxide solution and stirred for 5 minutes. Then, the presence of residues in the bottom of the flask was visually checked. In a case where residues were not observed, a cycle of adding another 1% by mass of the Al source and stirring thereof for 5 minutes was repeated until residues were found. In a case where residues were observed, stirring was performed for another ten minutes. Then, the presence of residues was visually checked again. A cycle of stirring and check of the presence of residues was repeated until the total stirring time reached 30 minutes. In a case where residues were observed, the flask was allowed to stand still in an electric furnace at 60°C for one day.

At this time, the container was maintained airtight so as to avoid volatilization of the solution. Then, the container was allowed to stand still for another day in the electric furnace at 25°C. The solution was filtered through a No. 4 filter paper. After the filtering, the filter paper was washed with 200 mL of water. Such washing was performed twice. The resulting filter paper and recoveries were dried at 60 °C for at least 10 hours. The weight of the Al source was weighed with an electronic balance, thereby obtaining the solubility.

As a result, the dried aluminum hydroxide gel, the aluminum hydroxide, and the pseudo-boehmite respectively had a solubility of 6.16 g/100 g-KOHaq. (1mol/L), 0. 66 g/100 g-KOHaq. (1mol/L), and 0.76 g/100 g-KOHaq. (1mol/L).

[Analysis of crystal structure of zeolite]

With an X-ray diffractometer (manufactured by Rigaku Corporation, Ultima IV), the crystal structures of zeolites synthesized in Example 1, Comparative Example 1, and Comparative Example 2 were analyzed. The analysis was performed using $CuK\alpha$ rays ($\lambda$=0.15418 nm) at 40 kV and 40 mA by the FT method and the concentration method. The measurement conditions were set as follows: the scanning range of 5 to 35°, the divergence slit of 2/3°, longitudinal restriction divergence slit of 10 mm, light-receiving slit of 0.3 mm, monochromatic light-receiving slit of 0.8 mm, and use of a monochrometer.

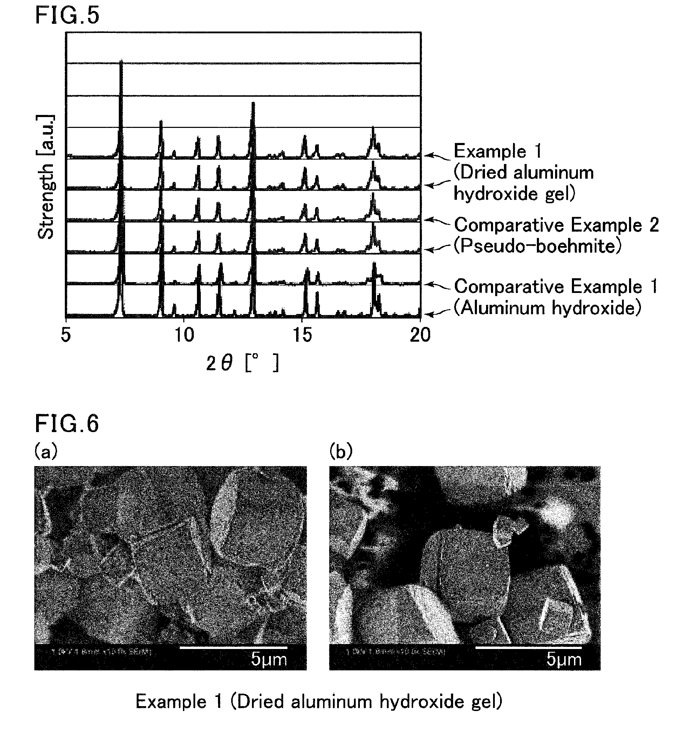

Fig. 5 shows XRD patterns of the zeolites synthesized in Example 1, Comparative Example 1, and Comparative Example 2.

Fig. 5 shows that the zeolite that is a CHA-structured aluminosilicate was synthesized in a single phase in all the zeolites.

[Measurement of particle size of zeolite]

With a scanning electron microscope (SEM, manufactured by Hitachi High-Technologies Corporation, S-4800), SEM photographs of the zeolites synthesized in Example 1, Comparative Example 1, and Comparative Example 2 were taken. Using these photographs, the particle sizes of the zeolites were measured. The measurement conditions were set to the accelerating voltage of 1 kV, emission of 10 $\mu$A, and WD of 2.2 mm or less. The particle size was determined as the average particle size of ten particles measured based on the diagonal lines thereof.

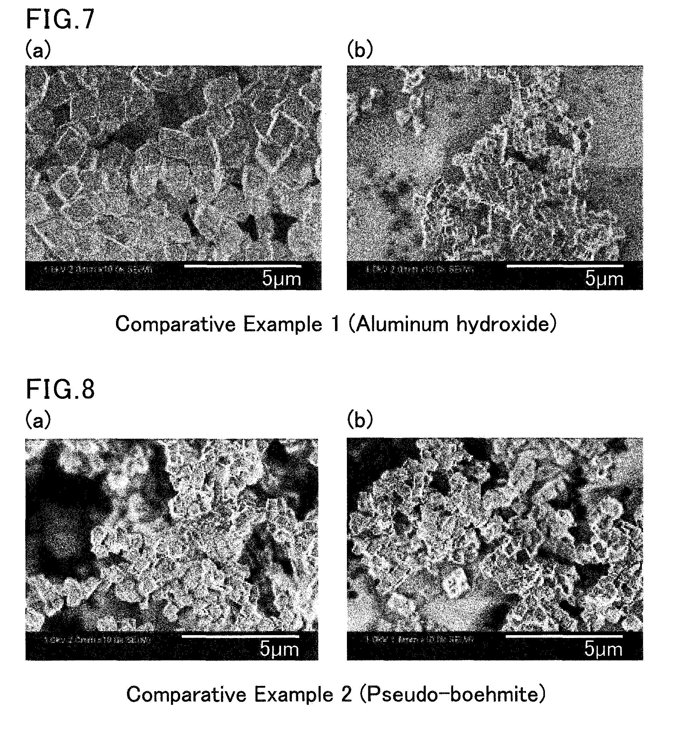

Figs. 6(a) and 6(b) each show a SEM photograph of the zeolite synthesized in Example 1. Figs. 7 (a) and 7 (b) each show a SEM photograph of the zeolite synthesized in Comparative Example 1. Figs. 8(a) and 8(b) each show a SEM photograph of the zeolite synthesized in Comparative Example 2.

Table 1 shows the relationship between the solubility of the Al source and the particle size of the zeolite.

[Table 1]

| | Example 1 (dried aluminum hydroxide gel) | Comparative Example 1 (Alminum hydroxide) | Comparative Example 2 (pseudo-boehmite) |
|---|---|---|---|
| Solubility [g/100g-KOH aq.(1mol/L)] | 6.16 | 0.66 | 0.76 |
| Particle size [$\mu$m] | 2.20 | 0.50 | 0.50 |
| | 2.50 | 1.30 | 0.40 |

Table 1 shows that the use of a dried aluminum hydroxide gel having high solubility in an aqueous potassium hydroxide solution as an Al source enabled to stably synthesize a zeolite (Example 1) in the form of particles having a partizle size of about 3.0 $\mu$m. The use of aluminum hydroxide having low solubility in an aqueous potassium hydroxide solution as an Al source resulted in synthesis of a zeolite (Comparative Example 1) containing particles varied in the particle size and having a particle size smaller than that in Example 1. The use of pseudo-boehmite as an Al source resulted in synthesis of a zeolite (Comparative Example 2) containing particles less varied in the particle size but having a particle size smaller than that in Example 1. As above, the difference in the solubility of an Al source in an aqueous potassium hydroxide solution presumably had an influence on the variation in the particle size of the synthesized zeolite.

[Measurement of SAR of zeolite]

With an energy-dispersive fluorescence X-ray analyzer (EDX, manufactured by HORIBA) which comes with SEM (S-4800), the $SiO_2/Al_2O_3$ molar ratios (SAR) of zeolites synthesized in Example 1, Comparative Example 1, and Comparative Example 2 were measured. The measurement conditions were the accelerating voltage of 10 kV, the emission of 10 $\mu$A, and the WD of 15 mm $\pm$ 0.1 mm. The SAR was determined as the average SARs of eight sites.

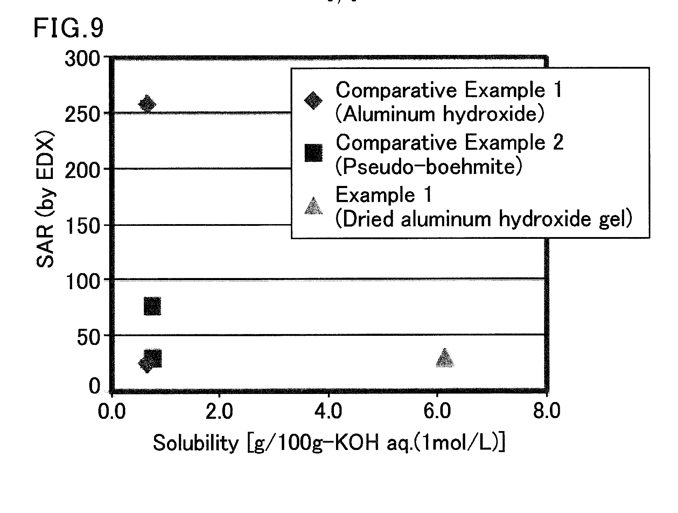

Fig. 9 is a graph showing a relationship between the solubility of the Al source and the SAR of the zeolite.

The SAR of the raw material composition was 30. Fig. 9 shows that the zeolite (Comparative Example 1) synthesized using aluminum hydroxide having low solubility in an aqueous potassium hydroxide solution had a great variation in the SAR. Accordingly, in Comparative Example 1, the amount of Al taken into the crystal upon synthesis was presumably varied. In the zeolite (Example 1) synthesized using a dried aluminum hydroxide gel having high solubility in an aqueous potassium hydroxide solution as an Al source, the variation of the SAR of the synthesized zeolite was found to be small. Presumably, in Example 1, the Al was stably taken into the crystal upon synthesis. The zeolite (Comparative Example 2) synthesized using pseudo-boehmite as an Al source showed the similar result as in Example 1. As above, the difference in the solubility of the Al source in an aqueous potassium hydroxide solution had an influence on the variation in the SAR of the synthesized zeolite.

The results show that the difference in the solubility of the Al source in an alkaline solution has an influence on the variations in the particle size and the SAR of the synthesized zeolite, and that the use of an Al source having high solubility presumably reduces the variations in the particle size and the SAR of the synthesized zeolite.

[Manufacturing of honeycomb catalyst]

A raw material paste was prepared by mixing the CHA (35% by mass) obtained in Example 1, boehmite (5% by mass) as an inorganic binder, glass fibers (8% by mass) having an average fiber diameter of 6.5 $\mu$m and an average fiber length of 100 $\mu$m, polystyrene particles (6% by mass) having an average particle size of 0.8 $\mu$m as a pore-forming material, methyl cellulose (5% by mass), fatty acid soap (4% by mass) as a forming auxiliary, and ion exchange water (37% by mass). The CHA used was ion-exchanged with copper ions

The raw material paste was extrusion-molded by an extrusion molding machine to provide a regular quadrangular pillar-shaped honeycomb molded body. The honeycomb molded body was dried by a reduced-pressure microwave dryer with an output of 4.5 kW at a reduced pressure of 6.7 kPa for 7 minutes, and then degreased by firing at 700°C for 2 hours, thereby providing a honeycomb fired body (honeycomb unit). The honeycomb unit had a regular quadrangular pillar-shape having a side of 35 mm and a length of 100 mm. In the honeycomb unit, the through-hole density was 124 pcs/cm$^2$ and the thickness of the partition wall was 0.20 mm.

The honeycomb unit contained 238 g/L of zeolite and 7.1 g/L of copper ions based on the apparent volume of the honeycomb unit. The honeycomb unit had an average pore size of 0.121 $\mu$m and a porosity of 51.6%.

[Measurement of NOx conversion rate]

Round pillar-shaped samples having a diameter of 1 inch and a length of 3 inches were cut out from the prepared honeycomb units with a diamond cutter. Through the samples, imitation gases at 200°C or 525°C were flowed at a space velocity (SV) of 40000/hr (200°C) or 100000/hr (525°C). With a catalyst analyzer (manufactured by HORIBA Ltd., SIGU-2000/MEXA-6000FT), the amount of NOx flowing out of the test samples was measured. The NOx conversion rate (%) represented by the formula was calculated:

```
{(Flow-in amount of NOx)-(Flow-out amount of NOx)}/(Flow-in
amount of NOx) x 100.
```

The imitation gases (200°C) contained 260 ppm of nitrogen monoxide, 90 ppm of nitrogen dioxide, 350 ppm of ammonia, 10% of oxygen, 5% of carbon dioxide, 5% of water, and nitrogen (balance). The imitation gases (525°C) contained 315 ppm of nitrogen monoxide, 35 ppm of nitrogen dioxide, 385 ppm of ammonia, 10% of oxygen, 5% of carbon dioxide, 5% of water, and nitrogen (balance). The NOx conversion rate was 91.4% in the case of 200°C and 76.8% in the case of 525°C.

In the method for manufacturing a zeolite of the present invention, the use of a dried aluminum hydroxide gel as an Al source contained in the raw material composition is essential. In the honeycomb catalyst of the present invention, the zeolite contained in the honeycomb unit is essentially required to be manufactured by the method for manufacturing a zeolite of the present invention. In the method for manufacturing a honeycomb catalyst of the present invention, the zeolite contained in the raw material paste is essentially required to be manufactured by the method for manufacturing a zeolite of the present invention. The zeolite of the present invention is essentially required to be manufactured by the method for manufacturing a zeolite of the present invention.

These essential features are appropriately combined with various constitutions (e.g., structure of a Si source, structure of an alkali source, structure of a structure directing agent, condition of hydrothermal synthesis, structure of a honeycomb unit, condition of firing of a honeycomb molded body) described in the present description, thereby giving a desired effect.

REFERENCE SIGNS LIST

| 10, 10' | Honeycomb catalyst |
| 11, 11' | Honeycomb unit |
| 11a | Through hole |
| 11b | Partition wall |
| 12 | Peripheral coat layer |
| 13 | Adhesive layer |
| 20 | Holding sealing material |
| 30 | Metal casing |
| 100 | Exhaust gas purifying apparatus |
| G | Exhaust gas |

**Claims**

1.  A method for manufacturing a zeolite that is a CHA-structured aluminosilicate,
    the method comprising a synthesis step of synthesizing a zeolite by reacting a raw material composition containing a Si source, an Al source, an alkali source, and a structure directing agent,
    the Al source being a dried aluminum hydroxide gel.

2.  The method according to claim 1,
    wherein the alkali source is at least one of potassium hydroxide and sodium hydroxide.

3.  The method according to claim 1 or 2,
    wherein the synthesis step further includes adding a seed crystal of the zeolite to the raw material composition.

4.  The method according to any one of claims 1 to 3,
    wherein the synthesized zeolite has an average particle size of 0.3 to 6.0 $\mu$m.

5.  The method according to any one of claims 1 to 4,
    wherein the synthesized zeolite has a $SiO_2/Al_2O_3$ molar ratio of 5 to 50.

6.  A honeycomb catalyst comprising
    a honeycomb unit having a plurality of through holes longitudinally formed in parallel with one another and a partition wall separating the through holes,
    wherein the honeycomb unit comprises a zeolite and an inorganic binder, and
    the zeolite is manufactured by the method according to any one of claims 1 to 5.

7.  The honeycomb catalyst according to claim 6,
    wherein the honeycomb unit further contains inorganic particles.

8.  The honeycomb catalyst according to claim 7,
    wherein the inorganic particles are at least one selected from the group consisting of alumina, titania, and zirconia.

9.  A method for manufacturing a honeycomb catalyst comprising a honeycomb unit having a plurality of through holes longitudinally formed in parallel with one another and a partition wall separating the through holes, the method including the steps of:

    a molding step of molding a raw material paste containing a zeolite and an inorganic binder to form a honeycomb molded body including a plurality of through holes longitudinally formed in parallel with one another and a partition wall separating the through holes; and
a firing step of firing the honeycomb molded body to prepare a honeycomb unit,
the zeolite contained in the raw material paste being manufactured by the method according to any one of claims 1 to 5.

10. A zeolite manufactured by the method according to any one of claims 1 to 5.

## FIG.2

FIG.3

FIG.4

## FIG.5

Example 1
(Dried aluminum
hydroxide gel)

Comparative Example 2
(Pseudo-boehmite)

Comparative Example 1
(Aluminum hydroxide)

## FIG.6

(a)                                    (b)

Example 1 (Dried aluminum hydroxide gel)

# FIG.7

(a)

(b)

Comparative Example 1 (Aluminum hydroxide)

# FIG.8

(a)

(b)

Comparative Example 2 (Pseudo-boehmite)

FIG.9

## REFERENCES CITED IN THE DESCRIPTION

**Patent documents cited in the description**

- WO 2011061836 A
- US 7601662 B
- US 4544538 A
- WO 2010074040 A